# EUROPÄISCHE PATENTSCHRIFT

(11) **EP 2 489 810 B1**
(45) Veröffentlichungstag und Bekanntmachung des Hinweises auf die Patenterteilung: **04.09.2013**
(21) Anmeldenummer: 12155694.8
(22) Anmeldetag: 16.02.2012
(51) Int. Cl.: E04C 2/52, F24D 3/16, F24F 13/24, F24F 5/00, E04B 9/00, E04B 9/02

(54) **Deckenelement aus zwei gelochten Gipskartonplatten mit dazwischenliegenden Rohrleitungen als Heiz-/Kühldecke**
Ceiling element with two perforated gypsum boards having ducts in between as a heating/cooling ceiling
Elément de plafond avec deux placopâtres perforés avec des tuyaux entre les deux comme plafond chauffant/refroidissant

(30) Priorität: 21.02.2011 DE 202011002988 U
(43) Veröffentlichungstag der Anmeldung: 22.08.2012
(73) Patentinhaber: Rehau AG + Co, 95111 Rehau (DE)
(72) Erfinder: Burkhardt, Oliver, 90763 Fürth (DE)

(56) Entgegenhaltungen:
- EP-A2- 2 045 536
- DE-A1- 19 920 457
- DE-A1-102006 056 730
- DE-U1- 20 106 884
- DE-U1- 29 918 445
- DE-U1-202009 002 911

## Beschreibung

Die vorliegende Erfindung bezieht sich auf ein Deckenelement mit schallabsorbierenden Eigenschaften, das ein erstes Plattenelement mit einer Vorderseite und einer Rückseite und ein zweites Plattenelement mit einer Vorderseite und einer Rückseite, wobei die Rückseite des ersten Plattenelements mit der Vorderseite des zweiten Plattenelements form- und/oder stoffschlüssig verbunden ist, das erste Plattenelement ein erstes Lochmuster und das zweite Plattenelement ein zweites Lochmuster aufweist und wobei die Lochungen des ersten Lochmusters in die Lochungen des zweiten Lochmusters münden. Darüber hinaus bezieht sich die vorliegende Erfindung auf eine Heiz-/Kühldecke mit mindestens einem derartigen Deckenelement.

In Büro- und Verwaltungsgebäuden werden in wachsendem Umfang Heiz-/Kühldecken mit schallabsorbierender Wirkung oder auch Decken mit rein akustischer Wirkung eingesetzt. Dadurch werden klimatische Anforderungen an den Raumkomfort einerseits sowie akustische Anforderungen andererseits erfüllt. Gipskartonbasierte Lochplatten als abgehängte Raumdecke bieten hierbei einen Lösungsansatz. In den Zwischenraum zwischen dem abgehängten Deckensystem und der Decke werden Versorgungs- und Installationssysteme verlegt, die unter anderem das Rohrsystem für das Kühl- oder Heizmittel der Deckenelemente beinhalten können.

Ein gattungsgemäßes Deckenelement ist in der DE 10 2007 040 034 A1 beschrieben. Das in der Druckschrift offenbarte Deckenelement besteht aus zwei gelochten Gipskartonplatten mit unterschiedlich großen Lochbildern, die derart miteinander verklebt sind, dass eine dem raumzugewandte gelochte Gipskartonplatte mit einem kleinerem Lochmuster versehen ist wie die rückseitige Platte, wobei die Mittelpunkte der Lochmuster dabei übereinander angeordnet sind. Durch diesen Aufbau des Deckenelements sollen die akustischen Eigenschaften des Deckenelements verbessert sein, jedoch ist die Integration einer Rohrleitung zum Transport eines Heiz-/Kühlmediums in das Deckenelement gemäß der DE 10 2007 040 034 A1 nicht vorgesehen.

Darüber hinaus ist es aus der EP 2 045 536 A2 bekannt, ein Akustikplattenelement aus einer matrixförmig gelochten Gipskartonplatte mit einer Kapillarrohrmatte zu versehen. In der Gipskartonplatte sind parallel und äquidistant angeordnete, einzelne, nicht miteinander verbundene Ausnehmungen in Schlitzform zur Aufnahme der Rohrleitungen vorhanden, die zwischen dem Lochmuster in die Gipskartonplatte eingebracht sind. Je ein Rohr für Vor- und Rücklauf sind zum Transport des Heiz-/Kühlmediums rückseitig außerhalb der Platte angeordnet. Hierbei wird es als nachteilig angesehen, dass die akustische Wirkung des Plattenelements beschränkt ist. Darüber hinaus zeigt das Deckenelement Defizite in optischer Hinsicht, weil die Rohre für Vor- und Rücklauf bzw. die Anbindungsleitungen bei ungünstigen Lichtverhältnissen, die beispielsweise durch in die Decke integrierte Einbauleuchten hervorgerufen werden, durch das Lochmuster hindurchschimmern bzw. erkennbare Schatten werfen und somit von der Sichtseite her erkannt werden können.

Aus DE 202009002911 U1 ist bekannt, eine Leitung innerhalb einer Nut zwischen zwei übereinander liegende Lochplatten vorzusehen. Dabei wird die Zeitung zwischen dem Lochbild der Platten angeordnet bzw. durch eine Textilschicht abgedeckt. Die Leitung ist somit von außen nicht sichtbar.

Der Erfindung liegt die Aufgabe zugrunde, ein Deckenelement mit schallabsorbierenden Eigenschaften zur Verfügung zu stellen, das die Nachteile des Stands der Technik überwindet. Insbesondere sollen die schallabsorbierenden Eigenschaften des erfindungsgemäßen Deckenelements verbessert sein. Darüber hinaus soll die Eigenstabilität des Deckenelementes erhalten bleiben, die optischen Anforderungen an ein Deckenelement sollen erfüllt sein und es soll kostengünstig herstellbar und installierbar sein. Weiter liegt die Aufgabe der vorliegenden Erfindung in der Bereitstellung einer entsprechenden Heiz-/Kühldecke.

Um die der Erfindung zugrunde gelegte Aufgabe zu lösen, ist erfindungsgemäß vorgesehen, dass das Deckenelement weiter eine von einem Wärmeträgermedium durchströmbare Rohrleitung umfasst, die in eine Nut eingelegt ist, die in die Rückseite des ersten Plattenelements eingebracht ist. Dadurch ist gewährleistet, dass das erfindungsgemäße Deckenelement nicht nur schallabsorbierende Eigenschaften besitzt, sondern auch eine Klimatisierung des Raums bewirken kann. Durch den Verbund zweier gelochter Plattenelemente weist das erfindungsgemäße Deckenelement eine hohe Eigenstabilität auf. Dazu trägt auch bei, dass an der Vorderseite des ersten Plattenelements, die dem Raum zugewandt ist, in Bereichen, in denen die Nut verläuft, eine verbleibende Materialstärke vorhanden ist. Durch das Einbringen der Nut in die Rückseite (raumabgewandte Seite) des ersten (des zu klimatisierenden Raum zugewandten) Plattenelements ist die Rohrleitung in dem erfindungsgemäßen Deckenelement nah an dem zu klimatisierenden Raum positioniert, so dass hohe Heiz-/Kühlleistungen erzielt werden können. Erfindungsgemäß sind die ersten und zweiten Plattenelemente stoffschlüssig und/oder formschlüssig miteinander verbunden, insbesondere miteinander verklebt. Ein derartiger Verbund weist hervorragende strukturelle Eigenschaften auf. Des Weiteren ist durch das stoff- und/oder formschlüssige Verbinden zweier gleichharter Werkstoffe in Sandwichbauweise ein komplexer und stabiler Aufbau vorhanden, der sehr gut geeignet ist, um eine glatte, ebene und geschlossene Deckenunteransicht ohne erhöhten Spachtelaufwand zu erstellen. Weiterhin ist es gemäß der vorliegenden Erfindung vorgesehen, dass die Nut derart in die Vorderseite des zweiten Plattenelements eingebracht ist, dass im zweiten Plattenelement ein Hohlraum gebildet ist, der sich in die Lochungen des zweiten Lochmusters erstreckt. Dementsprechend weist das erfindungsgemäße Deckenelement oberhalb der Rohrleitung einen Hohlraum auf, der im zweiten Plattenelement als sog. Helmholtz-Resonator einen offenen Raum zur Expansion der Schallwellen zur Verfügung stellt, was zur Verbesserung der akustischen Eigenschaften beiträgt. Im Ergebnis werden die der Erfindung zugrunde gelegten Aufgaben gelöst. Das erfindungsgemäße Deckenelement mit schallabsorbierenden Eigenschaften ist besonders wirksam im Frequenzbereich von 125 Hz bis 8000 Hz.

Dementsprechend stellt die vorliegende Erfindung ein Deckelelement mit schallabsorbierenden Eigenschaften zur Verfügung, das ein erstes Plattenelement mit einer Vorderseite und einer Rückseite, ein zweites Plattenelement mit einer Vorderseite und einer Rückseite und eine von einem Wärmeträgermedium durchströmbare Rohrleitung umfasst, die in eine Nut eingelegt ist, die in die Rückseite des ersten Plattenelements eingebracht ist, wobei die Rückseite des ersten Plattenelements mit der Vorderseite des zweiten Plattenelements form- und/oder stoffschlüssig verbunden ist, wobei das erstes Plattenelement ein erstes Lochmuster und das zweite Plattenelement ein zweites Lochmuster aufweisen, wobei die Lochungen des ersten Lochmusters in die Lochungen des zweiten Lochmusters münden, und wobei die Nut derart in die Vorderseite des zweiten Plattenelements eingebracht ist, dass im zweiten Plattenelement ein Hohlraum gebildet ist, der sich in die Lochungen des zweiten Lochmusters erstreckt. Weiter stellt die vorliegende Erfindung eine Heiz-/Kühldecke mit schallabsorbierenden Eigenschaften zur Verfügung, die mindestens einem Deckenelement nach einem der vorangegangenen Ansprüche umfasst.

Bevorzugte Ausführungen des erfindungsgemäßen Deckenelements sind in den Unteransprüchen beschrieben.

Im montierten Zustand des erfindungsgemäßen Deckenelements ist das erste Plattenelement dem bedeckten Raum zugewandt, während das zweite Plattenelement deckenseitig angeordnet ist.

Gemäß der vorliegenden Erfindung ist es bevorzugt, als erste und/oder zweite Plattenelemente im Wesentlichen rechtwinklige Elemente (insbesondere Gipskartonplatten, gipskartonähnliche Bauplatten, Faserplatten) zu verwenden. Die kürzere Seite des Rechtecks entspricht vorzugsweise in etwa der 5- bis 60-fachen Dicke des Deckenelements.

Es kann sich als hilfreich erweisen, wenn die Nut zumindest in dem ersten Plattenelement zwischen den Lochungen des ersten Lochmusters verläuft. Dadurch kann auch verhindert werden, dass die Rohrleitung über große Teile ihrer Länge sichtbar nach außen in Erscheinung tritt. Im Ergebnis wird die Leitung fest und insbesondere formschlüssig in das Deckenelement eingebunden und unverlierbar am Deckenelement gehalten. Vorzugsweise stehen die Leitungsanschlüsse bzw. ein Leitungseingang und ein Leitungsausgang, nicht nach außen hervor, sondern die Enden der Rohrleitung sind an dem Deckenelement gekennzeichnet. Alternativ dazu können lediglich die Leitungsanschlüsse bzw. ein Leitungseingang und ein Leitungsausgang, sichtbar nach außen hervorstehen. In beiden Fällen können die Leitungsanschlüsse bzw. ein Leitungseingang und ein Leitungsausgang bestimmungsgemäß an ein Klimaaggregat, welches die Leitung mit einem erhitzten oder gekühlten Wärmeträgermedium, z. B. Wasser, beschickt, gekoppelt werden.

Es kann auch günstig sein, wenn das erfindungsgemäße Deckenelement im Wesentlichen rechtwinklig ausgebildet ist und die Lochungen des ersten Lochmusters in den Bereichen des Deckenelements, in denen die Rohrleitung parallel zu einer Seitenkante des Deckenelements verläuft, zumindest teilweise zur Nut hin offen sind. Auf diese Weise wird der Hohlraum, der den Schallwellen zur Expansion zur Verfügung steht, weiter in Richtung der in das erfindungsgemäße Deckenelement eintretenden Schallwellen geöffnet, wodurch die Schallabsorption weiter verbessert wird.

Weiterhin kann es von Nutzen sein, wenn sich die Nut bis an die Rückseite des zweiten Plattenelements erstreckt. Durch diese Maßnahme wird der Helmholtz-Resonator in dem zweiten Plattenelement weiter vergrößert und dementsprechend die akustischen Eigenschaften des erfindungsgemäßen Deckenelements zusätzlich verbessert.

Es kann sich als hilfreich erweisen, wenn auf der Rückseite des zweiten Plattenelements eine Textilschicht, vorzugsweise eine Vliesschicht mit akustischen und/oder schallabsorbierenden Eigenschaften angeordnet, ist. Die Textilschicht kann die schallabsorbierenden Eigenschaften des Deckenelementes weiter verbessern, indem der den Schallwellen zur Verfügung stehende offene Raum im zweiten Plattenelement an der Rückseite des Elements begrenzt wird, und zusätzlich als Sichtschutz fungieren, um beispielsweise hinter dem Deckenelement angeordnete Anschlussleitungen sichtseitig zu verdecken. Darüber hinaus verhindert die Textilschicht ein Durchrieseln von Staub. Als Textilschicht wird vorzugsweise ein Vlies mit einer Materialstärke zwischen 0,1 mm und 2,0 mm, vorzugsweise 0,3 mm bis 0,6 mm und einem Flächengewicht von 50 g/m² bis 500 g/m², vorzugsweise 80 g/m² bis 120 g/m² eingesetzt. Dadurch besitzt die Textilschicht eine ausreichende Eigensteifigkeit, wodurch ein Mitschwingen aufgrund einer entsprechenden Anregung durch die Schallwellen verhindert wird. Die Verwendung eines Vlieses mit einer Materialstärke von etwa 0,45 mm und einem Flächengewicht von etwa 100 g/m² hat sich in dieser Hinsicht als besonders günstig erwiesen.

Es kann auch bevorzugt sein, wenn die Lochungen des ersten und zweiten Plattenelements denselben Durchmesser besitzen und so zueinander ausgerichtet sind, dass die Mittelpunkte der Lochungen übereinander liegen. Dadurch können Schallwellen leichter tief in das Deckenelement vordringen und somit besser absorbiert werden. Im Ergebnis werden die schallabsorbierenden Eigenschaften des Deckenelementes noch weiter verbessert.

Es kann auch günstig sein, wenn die Lochungen im zweiten Plattenelement einen größeren Durchmesser besitzen als die Lochungen im ersten Plattenelement und so zueinander ausgerichtet sind, dass die Mittelpunkte der Lochungen übereinander liegen. Auf diese Weise wird der Anteil der aus dem zweiten Plattenelement austretenden Schallwellen reduziert, was die schallabsorbierenden Eigenschaften des erfindungsgemäßen Deckenelements weiter verbessert.

Es kann auch von Nutzen sein, wenn die einzelnen Lochungen der Lochmuster in dem ersten Plattenelement und/oder in dem zweiten Plattenelement ein kreisförmigen oder einen rechteckigen, insbesondere quadratischen Querschnitt aufweisen. Auch Kombinationen kreisförmiger und rechteckiger bzw. quadratischer Querschnitte der Lochungen können gemäß der vorliegenden Erfindung zum Einsatz kommen.

Es kann sich als praktisch erweisen, wenn das erste Plattenelement und/oder das zweite Plattenelement als Gipskartonplatte(n), gipskartonähnliche(n) Bauplatte(n) oder als Faserplatte(n) ausgebildet ist/sind. Eine Gipskartonplatte ist von diesen besonders bevorzugt, weil sie hervorragende strukturelle sowie schallabsorbierende Eigenschaften besitzt. Durch die Verwendung einer Gipskartonplatte als erstes und/oder zweites Plattenelement kann somit die Steifigkeit und die schallabsorbierende Wirkung des Deckenelementes weiter verbessert werden.

Es kann aber auch nützlich sein, wenn das zweite Plattenelement eine Schaumstruktur oder eine schaumähnliche Struktur aufweist, vorzugsweise als Blähglasplatte oder als Schaumglasplatte ausgebildet ist. Eine Schaumglasplatte bzw. Blähglasplatte besitzt selbst eine sehr gute Schallabsorptionseigenschaft. Wird diese Blähglasplatte mit einer ein Lochmuster aufweisenden Gipskartonplatte, wie sie im ersten Plattenelement vorliegt, kombiniert, ist eine sehr gute Schallabsorption gewährleistet. Die Schaumglasplatte umfasst vorzugsweise eine Wärmeleitfähigkeit im Bereich von 0,06 W/mK bis 0,08 W/mK und eine Druckfestigkeit im Bereich von 1,0 N/mm² bis 4,0 N/mm².

Es kann ferner nützlich sein, wenn das erste und/oder das zweite Plattenelement Zusatzstoffe zur Erhöhung der Wärmeleitfähigkeit enthält/enthalten. Zur Erhöhung der Wärmeleitfähigkeit kann beispielsweise Graphit als Zusatzstoff beigemischt werden. Dadurch wird die Wärmeleitfähigkeit des Deckenelementes in den Plattenebenen erheblich verbessert, sodass großflächig erhebliche Wärmemengen zwischen den Plattenelementen selbst und zwischen dem ersten Plattenelement und der Umgebung ausgetauscht werden können. Grundsätzlich sollte das erste und/oder das zweite Plattenelement eine Wärmeleitfähigkeit größer als 0,2 W/mK, vorzugsweise im Bereich zwischen 0,2 W/mK und 0,6 W/mK aufweisen. Das Material des ersten und/oder des zweiten Plattenelements kann organisch, anorganisch und/oder mineralisch sein. Beispielsweise kann als das erste und/oder das zweite Plattenelement eine Gipskartonplatte mit Graphitanteilen zwischen 5 Gew-% und 25 Gew-%, vorzugsweise zwischen 15 Gew-% und 20 Gew-%, eingesetzt werden. Die Gipskartonplatte weist ohne Graphitanteile einen Wärmeleitwert im Bereich von 0,25 W/mK auf. Mit einem Graphitanteil zwischen 5 Gew-% und 25 Gew-% ergibt sich ein Wärmeleitwert der Gipskartonplatte im Bereich von 0,52 W/mK. Wahlweise kann dieser Gewichtsanteil ganz oder teilweise durch Metallfaser und/oder -pulver ersetzt werden.

Es kann sich auch als günstig erweisen, wenn die Rohrleitung weiß oder in Grautönen ausgebildet ist. Durch diese Farbwahl ist die Farbe der Rohrleitung an die Farbe des Lochschattens des Lochmusters angepasst, was das Erkennen der Rohrleitung von der Raumseite erschwert.

Gemäß der vorliegenden Erfindung ist es bevorzugt, als Rohrleitung ein sauerstoffdiffusionsdichtes Kunststoffrohr zu verwenden. Die Leitung weist vorzugsweise einen kreisförmigen Querschnitt auf. Des Weiteren kann die Leitung schleifenförmig, spiralförmig oder mäanderförmig verlegt werden. Der Wärmeübergang zwischen einem kreisförmigen Querschnitt und einem im Wesentlichen flachen Element, wie dem zweiten Plattenelement, ist im Allgemeinen ungünstig. Vorzugsweise ist der Nutquerschnitt zum Querschnitt der Rohrleitung komplementär. Durch das Anordnen der Leitung in einer Nut, kann ein Wärmeübergang zwischen der Leitung und dem ersten Plattenelement erheblich verbessert werden. Dazu kann es hilfreich sein, wenn die Leitung das erste Plattenelement über wenigstens ein Viertel, vorzugsweise über die Hälfte, bevorzugt mehr als über die Hälfte des Leitungsumfangs kontaktiert.

Es kann sich als vorteilhaft herausstellen, wenn die Nut zumindest in den geraden Nutabschnitten, vorzugsweise auch in den gekrümmten Nutabschnitten, zwischen den Lochungen bzw. Löchern des Lochmusters verläuft. Zwischen den Löchern des Lochmusters des ersten Plattenelementes sind Stege ausgebildet, welche durch ihre Stärke die Querstabilität des Plattenelementes maßgeblich mitbestimmen. Wird die Leitung zwischen dem Lochmuster bzw. in den Stegen verlegt, so ist jederzeit ein guter Wärmeübergang zwischen der Leitung und dem ersten Plattenelement gewährleistet. Außerdem tritt die Leitung nicht über die Lochungen sichtbar nach außen in Erscheinung. Des Weiteren beeinflusst die Leitung die akustischen Eigenschaften des Deckenelements nur sehr wenig bis gar nicht.

Darüber hinaus kann es nützlich sein, wenn eine Isolierung rückseitig auf das Deckenelement aufgebracht wird. Das Aufbringen der Isolierung auf das Deckenelement kann dabei flächig oder in Streifen mit Montagevorrichtung erfolgen. Das Material für die Isolierung kann aus organischen, anorganischen und mineralischen Materialien sowie Gemischen daraus ausgewählt sein. Vorzugsweise besitzt das Material der Isolierung eine Wärmeleitfähigkeit im Bereich von 0,01 W/mK bis 0,10 W/mK, stärker bevorzugt im Bereich von 0,02 W/mK bis 0,08 W/mK. Die Isolierung ist bevorzugt derart ausgebildet, dass sie die schallisolierenden Eigenschaften des Deckenelements unterstützt. Das Material der Isolierung ist vorzugsweise mit einer Polyethylen-Folie mit einer bevorzugten Dicke von 10 µm bis 50 µm, besonders bevorzugt von 20 µm bis 30 µm umkapselt, um ggf. auftretenden Faserflug zu vermeiden.

Die bevorzugten Ausführungsbeispiele der Erfindung sowie die bevorzugte Anwendung des erfindungsgemäßen Deckenelementes werden nachstehend mit Bezug auf die beigefügten Zeichnungen beschrieben.

### Kurze Beschreibung der Figuren

- Fig. 1: zeigt eine Draufsicht auf eine Ausführungsform des erfindungsgemäßen Deckenelements.
- Fig. 2: zeigt eine bereichsweise Querschnittsdarstellung des in Fig. 1 dargestellten erfindungsgemäßen Deckenelements entlang der Linie A-A.
- Fig. 3: zeigt eine bereichsweise Querschnittsdarstellung des in Fig. 1 dargestellten erfindungsgemäßen Deckenelements entlang der Linie B-B.
- Fig. 4: eine bereichsweise Querschnittsdarstellung einer anderen Ausführungsform des erfindungsgemäßen Deckenelements.

### Detaillierte Beschreibung der bevorzugten Ausführungsbeispiele

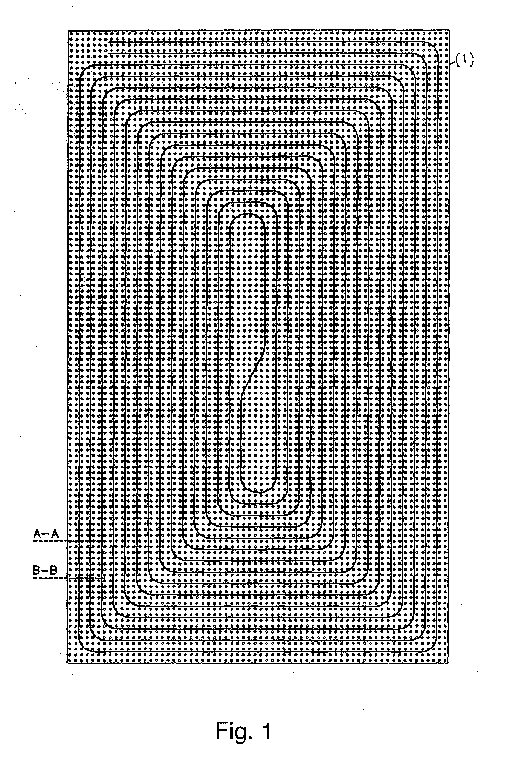

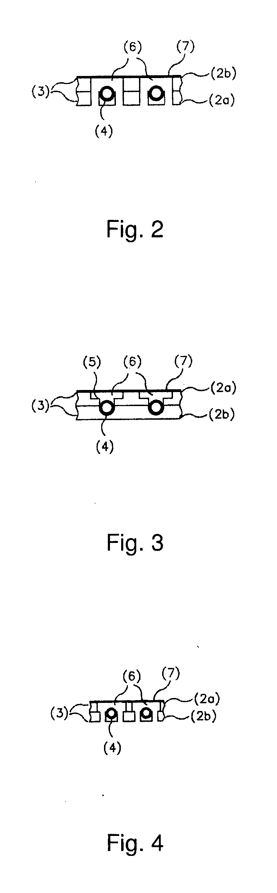

Fig. 1 zeigt eine Draufsicht auf das erfindungsgemäße Deckenelement 1 mit schallabsorbierenden Eigenschaften, dessen Aufbau nachfolgend in Bezug auf Fig. 2 bis Fig. 4 beschrieben wird.

Fig. 2 zeigt einen Ausschnitt des Querschnitts des in Fig. 1 dargestellten Deckenelements 1 entlang der Linie A-A, also im Bereich der Lochungen. Das erfindungsgemäße Deckenelement 1 mit schallabsorbierenden Eigenschaften umfasst ein erstes Plattenelement 2a und ein zweites Plattenelement 2b, die als Gipskartonplatten ausgebildet sind. Das erste Plattenelement 2a und das zweite Plattenelement 2b weisen jeweils eine Vorderseite und eine Rückseite auf. In dem erfindungsgemäßen Deckenelement 1 sind die Rückseite des ersten Plattenelements 2a und die Vorderseite des zweiten Plattenelements 2b form- und/oder stoffschlüssig (insbesondere durch Verkleben) miteinander verbunden. Dadurch sind das erste Plattenelement 2a und das zweite Plattenelement 2b in dem Plattenverbund 3 parallel zueinander angeordnet.

Der Umriss der ersten und zweiten Plattenelemente 2a, 2b in der Plattenebene ist keinerlei Beschränkungen unterworfen. Bevorzugt wird jedoch eine Ausgestaltung, bei der die ersten und zweiten Plattenelemente 2a, 2b identische Umrisse aufweisen. Bevorzugt sind die ersten und zweiten Plattenelemente 2a, 2b rechteckig ausgebildet. Die kürzere Seite des Rechtecks entspricht vorzugsweise in etwa der 5- bis 60-fachen Dicke des Deckenelements 1.

Das erste Plattenelement 2a besitzt ein erstes Lochmuster und das zweite Plattenelement 2b ein zweites Lochmuster, wobei die Lochungen des ersten Lochmusters in die Lochungen des zweiten Lochmusters münden. Die Lochmuster sind dabei bevorzugt als matrixförmige Lochmuster mit gleichen Abständen ausgebildet. Die einzelnen Lochungen der Lochmuster in dem ersten Plattenlement 2a und/oder in dem zweiten Plattenelement 2b können dabei ein kreisförmigen oder einen rechteckigen, insbesondere quadratischen Querschitt aufweisen. Auch Kombinationen kreisförmiger und rechteckiger bzw. quadratischer Querschnitte der Lochungen können gemäß der vorliegenden Erfindung zum Einsatz kommen.

In der in den Fig. 1 bis 3 dargestellten Ausführungsform des erfindungsgemäßen Deckenelements 1 sind die Lochungen der ersten und zweiten Plattenelemente 2a, 2b kreisförmig ausgebildet und besitzen denselben Durchmesser. Die Lochmuster der Plattenelemente 2a, 2b sind identisch zueinander. Die Elemente 2a, 2b im Plattenverbund 3 sind dabei derart zueinander ausgerichtet, dass die Mittelpunkte der Lochungen übereinander liegen.

Das erfindungsgemäße Deckenelement 1 umfasst weiter eine von einem Wärmeträgermedium durchströmbare Rohrleitung 4, die unter Formschluss in eine Nut 5 eingelegt ist. Dadurch wird die Rohrleitung 4 fest in das erste Plattenelement 2a eingebunden und aufgrund des darauf aufgebrachten zweiten Plattenelements 2b unverlierbar am Deckenelement gehalten. Der Querschnitt der Rohrleitung 4 reicht dabei bis in das zweite Plattenelement 2b hinein. Die Nut 5 ist in die Rückseite des ersten Plattenelements 2a eingebracht und erstreckt sich derart in die Vorderseite des zweiten Plattenelements 2b, dass im zweiten Plattenelement 2b ein Hohlraum 6 ausgebildet ist, der sich in die Lochungen des zweiten Lochmusters hinein erstreckt. Der Hohlraum 6 wird also im zweiten Plattenelement 2b durch den Raum oberhalb der Rohrleitung 4 und die daran angrenzenden Lochungen gebildet. Seitlich begrenzt wird der Hohlraum 6 durch die der Rohrleitung 4 abgewandten Seitenwände der Lochungen des zweiten Plattenelements 2a. Eine Textilschicht 7 stellt die obere (im montierten Zustand deckenseitige) Begrenzung des Hohlraums 6 dar.

Im ersten Plattenelement 2a verläuft die Nut 5 in Abschnitten, in denen die Rohrleitung 4 gerade verläuft, zwischen den Lochungen des ersten Lochmusters. Die Lochungen des ersten Lochmuster sind durch ihre Seitenwände von der Nut 5 abgegrenzt. In alternativen Ausführungsformen können die Seitenwände der Lochungen des ersten Lochmusters zur Rückseite des ersten Plattenelements 2a hin auch zur Nut 5 offen sein. Die Nut 5 erstreckt sich bis an die Rückseite des zweiten Plattenelements 2b, d. h. über die gesamte Dicke des zweiten Plattenelements 2b. Alternativ dazu kann das Material des zweiten Plattenelements 2b an ihrer Rückseite in einer Restwanddicke, vorzugsweise mindestens 4 mm, erhalten bleiben.

Auf die Rückseite des zweiten Plattenelements 2b ist eine Textilschicht 7 aufkaschiert, die in der in den Fig. 1 bis 3 dargestellten Ausführungsform des erfindungsgemäßen Deckenelements 1 als Vliesschicht 7 ausgebildet ist. Die Textilschicht 7 weist akustische und/oder schallabsorbierende Eigenschaften auf.

Die Rohrleitung 4 ist in der in den Fig. 1 bis 3 dargestellten Ausführungsform des erfindungsgemäßen Deckenelements 1 als sauerstoffdiffusionsdichtes Kunststoffrohr ausgebildet, weist einen kreisförmigen Querschnitt auf und ist im Deckenelement 1 etwa schleifenförmig verlegt. Die Rohrleitung 4 ist in weiß gefärbt, sodass die Farbe der Rohrleitung 4 an die Farbe des Lochschattens des Lochmusters angepasst.

Eine ausschnittsweise Querschnittsdarstellung des in Fig. 1 dargestellten erfindungsgemäßen Deckenelements entlang der Linie B-B, also in einem Bereich, in dem keine Lochung vorhanden ist, ist in Fig. 3 gezeigt. Daraus ist ersichtlich, wie die Rohrleitung 4 besonders in den Bereichen, in denen im ersten Plattenelement 2a keine Lochung vorhanden ist, ein starker Halt der Rohrleitung in der Nut gewährleistet ist, und die Nut im zweiten Plattenelement 2b in Richtung auf dessen Rückseite erweitert ist. Dadurch wird der Hohlraum 6, der an der Rückseite des zweiten Plattenelements 2b durch die Textilschicht 7 begrenzt ist, weiter vergrößert.

Auf das Deckenelement 1 kann auf die Textilschicht 7 zusätzlich eine Isolierung aufgebracht werden. Das Aufbringen der Isolierung auf das Deckenelement 1 kann dabei flächig oder in Streifen mit Montagevorrichtung erfolgen. Das Material für die Isolierung kann aus organischen, anorganischen und mineralischen Materialien sowie Gemischen daraus ausgewählt sein. Vorzugsweise besitzt das Material der Isolierung eine Wärmeleitfähigkeit im Bereich von 0,01 W/mK bis 0,10 W/mK, stärker bevorzugt im Bereich von 0,02 W/mK bis 0,08 W/mK. Die Isolierung ist bevorzugt derart ausgebildet, dass sie die schallisolierenden Eigenschaften des Deckenelements 1 unterstützt. Das Material der Isolierung ist vorzugsweise mit einer Polyethylen-Folie mit einer bevorzugten Dicke von 10 µm bis 50 µm, besonders bevorzugt von 20 µm bis 30 µm umkapselt, um ggf. auftretenden Faserflug zu vermeiden.

Zur Herstellung des in den Fig. 1 bis 3 gezeigten Deckenelements 1 werden zwei identische Gipskartonplatten mit identischem Umriss und identischem Lochmuster bereitgestellt. In die Rückseite des ersten Plattenelements 2a wird gemäß dem Beispiel in Fig. 1 eine schleifenförmige Nut 5 eingefräst, in der die Rohrleitung 4 positioniert wird, sodass ein Leitungseingang sowie ein Leitungsausgang zum Anschluss an ein herkömmliches Klimaaggregat zugänglich sind. Die Position von Leitungseingang und Leitungsausgang sind an dem Deckenelement 1 vorzugsweise rückseitig gekennzeichnet. In das zweite Plattenelement 2b wird ebenfalls eine Nut eingefräst, die sich über die gesamte Dicke des Plattenelements 2b ertreckt. Dabei wird der Verlauf der Nut in dem zweiten Plattenelement so gewählt, dass er dem Verlauf der Nut 5 im ersten Plattenelement entspricht. Im zweiten Plattenelement 2b ist die Nut zusätzlich derart ausgebildet, dass sie zur Rückseite hin verbreitert ist. Die ersten und zweiten Plattenelemente 2a, 2b werden bestimmungsgemäß gemäß Fig. 2 und 3 parallel übereinander angeordnet und miteinander verklebt oder beispielsweise über eine randseitige Einfassung in der Gestalt von U-profilförmigen Rahmenelementen formschlüssig miteinander verbunden. Abschließend wird auf die Rückseite des zweiten Plattenelements 2b die Textilschicht 7 aufkaschiert.

Die in Fig. 4 ausschnittsweise im Querschnitt dargestellte Ausführungsform des erfindungsgemäßen Deckenelements 1 unterscheidet sich von dem erfindungsgemäßen Deckenelement 1 gemäß Fig. 1 bis 3 lediglich darin, dass die Lochungen des Lochmusters im ersten Plattenelement 2a einen kleineren Durchmesser besitzen wie die Lochungen des Lochmusters im zweiten Plattenelement 2b. Ansonsten ist der Aufbau dieses erfindungsgemäßen Deckenelements 1 identisch zum Aufbau des erfindungsgemäßen Deckenelementes 1 gemäß Fig. 1 bis 3. Um Wiederholungen zu vermeiden, wird auf die vorangegangene Beschreibung Bezug genommen und es werden dieselben Bezugszeichen verwendet.

## Patentansprüche

1. Deckenelement (1) mit schallabsorbierenden Eigenschaften, das ein erstes Plattenelement (2a) mit einer Vorderseite und einer Rückseite und ein zweites Plattenelement (2b) mit einer Vorderseite und einer Rückseite umfasst, wobei die Rückseite des ersten Plattenelements (2a) mit der Vorderseite des zweiten Plattenelements (2b) formund/oder stoffschlüssig verbunden ist und wobei das erstes Plattenelement (2a) ein erstes Lochmuster und das zweite Plattenelement (2b) ein zweites Lochmuster aufweisen, wobei die Lochungen des ersten Lochmusters in die Lochungen des zweiten Lochmusters münden, wobei
das Deckenelement (1) weiter eine von einem Wärmeträgermedium durchströmbare Rohrleitung (4) umfasst, die in eine Nut (5) eingelegt ist, **dadurch gekennzeichnet, dass** diese Nut (5) in die Rückseite des ersten Plattenelements (2a) eingebracht ist und sich derart in die Vorderseite des zweiten Plattenelements (2b) erstreckt, dass im zweiten Plattenelement (2b) ein Hohlraum (6) gebildet ist, der sich in die Lochungen des zweiten Lochmusters erstreckt.

2. Deckenelement (1) nach Anspruch 1, **dadurch gekennzeichnet, dass** die Nut (5) zumindest in dem ersten Plattenelement (2a) zwischen den Lochungen des ersten Lochmusters verläuft.

3. Deckenelement (1) nach Anspruch 1 oder Anspruch 2, **dadurch gekennzeichnet, dass** das Deckenelement (1) im Wesentlichen rechtwinklig ausgebildet ist und die Lochungen des ersten Lochmusters in den Bereichen des Deckenelements (1), in denen die Rohrleitung (4) parallel zu einer Seitenkante des Deckenelements (1) verläuft, zumindest teilweise zur Nut (5) hin offen sind.

4. Deckenelement (1) nach einem der vorangegangenen Ansprüche, **dadurch gekennzeichnet, dass** sich die Nut (5) bis an die Rückseite des zweiten Plattenelements (2b) erstreckt.

5. Deckenelement (1) nach einem der vorangegangenen Ansprüche, **dadurch gekennzeichnet, dass** auf der Rückseite des zweiten Plattenelements (2b) eine Textilschicht (7), vorzugsweise eine Vliesschicht mit akustischen und/oder schallabsorbierenden Eigenschaften, angeordnet ist.

6. Deckenelement (1) nach einem der vorangegangenen Ansprüche, **dadurch gekennzeichnet, dass** die Lochungen des ersten und zweiten Plattenelements (2a, 2b) denselben Durchmesser besitzen und so zueinander ausgerichtet sind, dass die Mittelpunkte der Lochungen übereinander liegen.

7. Deckenelement (1) nach einem der Ansprüche 1 bis 5, **dadurch gekennzeichnet, dass** die Lochungen im zweiten Plattenelement (2b) einen größeren Durchmesser besitzen als die Lochungen im ersten Plattenelement (2a) und so zueinander ausgerichtet sind, dass die Mittelpunkte der Lochungen übereinander liegen.

8. Deckenelement (1) nach einem der vorangegangenen Ansprüche, **dadurch gekennzeichnet, dass** das erste Plattenelement (2a) und/oder das zweite Plattenelement (2b) als Gipskartonplatte(n), gipskartonähnliche(n) Bauplatte(n) oder als Faserplatte(n) ausgebildet ist/sind.

9. Deckenelement (1) nach einem der vorangegangenen Ansprüche, **dadurch gekennzeichnet, dass** die Rohrleitung (4) weiß oder in Grautönen ausgebildet ist.

10. Heiz-/Kühldecke mit schallabsorbierenden Eigenschaften, die mindestens einem Deckenelement (1) nach einem der vorangegangenen Ansprüche umfasst.

## Claims

1. Ceiling element (1) with sound-absorbing properties which comprises a first board element (2a) with a front side and a rear side and a second board element (2b) with a front side and a rear side, wherein the rear side of the first board element (2a) is connected to the front side of the second board element (2b) in a form-fitting and/or integrally bonded manner and wherein the first board element (2a) has a first hole pattern and the second board element (2b) has a second hole pattern, wherein the perforations of the first hole pattern open into the perforations of the second hole pattern, wherein the ceiling element (1) further comprises a pipeline (4) which can be traversed by a heat-transfer medium and which is inserted into a groove (5), **characterized in that** this groove (5) is made in the rear side of the first board element (2a) and extends into the front side of the second board element (2b) in such a way that a cavity (6) is formed in the second board element (2b) and extends into the perforations of the second hole pattern.

2. Ceiling element (1) according to Claim 1, **characterized in that**, at least in the first board element (2a), the groove (5) extends between the perforations of the first hole pattern.

3. Ceiling element (1) according to Claim 1 or Claim 2, **characterized in that** the ceiling element (1) has a substantially rectangular design and the perforations of the first hole pattern are at least partially open towards the groove (5) in the regions of the ceiling element (1) in which the pipeline (4) extends parallel to a side edge of the ceiling element (1).

4. Ceiling element (1) according to one of the preceding claims, **characterized in that** the groove (5) extends up to the rear side of the second board element (2b).

5. Ceiling element (1) according to one of the preceding claims, **characterized in that** a textile layer (7), preferably a non-woven layer with acoustic and/or sound-absorbing properties, is arranged on the rear side of the second board element (2b).

6. Ceiling element (1) according to one of the preceding claims, **characterized in that** the perforations of the first and second board element (2a, 2b) have the same diameter and are oriented with respect to one another such that the centre points of the perforations are situated above one another.

7. Ceiling element (1) according to one of Claims 1 to 5, **characterized in that** the perforations in the second board element (2b) have a larger diameter than the perforations in the first board element (2a) and are oriented with respect to one another such that the centre points of the perforations are situated above one another.

8. Ceiling element (1) according to one of the preceding claims, **characterized in that** the first board element (2a) and/or the second board element (2b) is/are designed as plasterboard(s), plasterboard-like construction board(s) or as fibreboard(s).

9. Ceiling element (1) according to one of the preceding claims, **characterized in that** the pipeline (4) is designed to be white or in grey shades.

10. Heating/cooling ceiling with sound-absorbing properties which comprises at least one ceiling element (1) according to one of the preceding claims.

## Revendications

1. Élément de plafond (1) présentant des propriétés d'absorption acoustique, lequel élément de plafond comporte un premier élément de panneau (2a) pourvu d'un côté avant et d'un côté arrière et un deuxième élément de panneau (2b) pourvu d'un côté avant et d'un côté arrière, le côté arrière du premier élément de panneau (2a) étant relié au côté avant du deuxième élément de panneau (2b) par complémentarité de formes et/ou par liaison de matière et le premier élément de panneau (2a) comprenant un premier motif de trous et le deuxième élément de panneau (2b) comprenant un deuxième motif de trous, les perforations du premier motif de trous débouchant des les perforations du deuxième motif de trous, l'élément de plafond (1) comportant en outre un tuyau (4) pouvant être traversé par un milieu caloporteur, lequel tuyau est inséré dans une rainure (5), **caractérisé en ce que** cette rainure (5) est ménagée dans le côté arrière du premier élément de panneau (2a) et s'étend dans le côté avant du deuxième élément de panneau (2b) de telle sorte qu'un espace creux (6) soit formé dans le deuxième élément de panneau (2b), lequel espace creux s'étend dans les perforations du deuxième motif de trous.

2. Élément de plafond (1) selon la revendication 1, **caractérisé en ce que** la rainure (5) s'étend au moins dans le premier élément de panneau (2a) entre les perforations du premier motif de trous.

3. Élément de plafond (1) selon la revendication 1 ou 2, **caractérisé en ce que** l'élément de plafond (1) est réalisé essentiellement de manière rectangulaire et les perforations du premier motif de trous dans les régions de l'élément de plafond (1) dans lesquelles le tuyau (4) s'étend parallèlement à une arête latérale de l'élément de plafond (1) sont au moins partiellement ouvertes en direction de la rainure (5).

4. Élément de plafond (1) selon l'une quelconque des revendications précédentes, **caractérisé en ce que** la rainure (5) s'étend jusqu'au côté arrière du deuxième élément de panneau (2b).

5. Élément de plafond (1) selon l'une quelconque des revendications précédentes, **caractérisé en ce qu'**une couche textile (7), de préférence une couche en non-tissé présentant des propriétés acoustiques et/ou d'absorption acoustique, est disposée sur le côté arrière du deuxième élément de panneau (2b).

6. Élément de plafond (1) selon l'une quelconque des revendications précédentes, **caractérisé en ce que** les perforations du premier et du deuxième élément de panneau (2a, 2b) présentent le même diamètre et sont orientées les unes par rapport aux autres de telle sorte que les centres des perforations soient superposés.

7. Élément de plafond (1) selon l'une quelconque des revendications 1 à 5, **caractérisé en ce que** les perforations dans le deuxième élément de panneau (2b) présentent un diamètre supérieur à celui des perforations dans le premier élément de panneau (2a) et sont orientées les unes par rapport aux autres de telle sorte que les centres des perforations soient superposés.

8. Élément de plafond (1) selon l'une quelconque des revendications précédentes, **caractérisé en ce que** le premier élément de panneau (2a) et/ou le deuxième élément de panneau (2b) est/sont réalisé(s) sous forme de placoplâtre(s), de panneau(x) de construction similaire(s) aux placoplâtres ou de panneau(x) de fibres.

9. Élément de plafond (1) selon l'une quelconque des revendications précédentes, **caractérisé en ce que** le tuyau (4) est blanc ou se présente dans des tons de gris.

10. Plafond chauffant/refroidissant présentant des propriétés d'absorption acoustique, lequel plafond comporte au moins un élément de plafond (1) selon l'une quelconque des revendications précédentes.
